# EUROPEAN PATENT APPLICATION

(11) **EP 4 761 246 A1**
(43) Date of publication of application: **17.06.2026**
(21) Application number: 24851110.7
(22) Date of filing: 08.08.2024
(51) Int. Cl.: H04N 21/2187, H04N 21/4788, H04N 21/431, H04N 21/482

(54) **METHOD AND APPARATUS FOR LIVE-STREAMING ROOM INTERACTION, AND DEVICE AND STORAGE MEDIUM**

(30) Priority: 09.08.2023 CN 202311004840
(71) Applicant: Lemon Inc., Grand Cayman, KY1-1205 (KY); Beijing Zitiao Network Technology Co., Ltd., Beijing 100190 (CN)
(72) Inventor: HU, Boyao, Beijing 100028 (CN); TANG, Feifei, Beijing 100028 (CN)
(74) Representative: Grünecker Patent- und Rechtsanwälte PartG mbB
(86) International application number: PCT/CN2024/110810
(87) International publication number: WO 2025/031465

(57) **Abstract**

Embodiments in the disclosure provides a method, apparatus, device, and a storage medium for live stream interaction. In the method, at a first terminal, first information input by a first user of a live stream is acquired; first media content corresponding to the first information is presented in a first live streaming interface of the live stream; and in response to second information input by a second user of the live stream via a second terminal, at least second media content corresponding to the second information is presented in the first live streaming interface. Therefore, an interactive mode of collaborative creation of media content by multi users in the live stream can be supported, so that the interactive experience of the live stream is improved.

## Description

**This** application claims the benefit of Chinese Patent Application No. 202311004840.0 filed on August 9, 2023, entitled "Method, Apparatus, Device and Storage Medium for Live stream Interaction", the entire content of which is incorporated herein by reference.

### FIELD

Example embodiments in the disclosure generally relate to the field of computers, and in particular, to a method, apparatus, device, and computer-readable storage medium for live stream interaction.

### BACKGROUND

With the development of computer technologies, an increasing number of applications are capable of providing live streaming functions. During a live streaming process, a streamer can interact with viewers, attract more viewers, and improve the live streaming experience of the viewers. For example, chats can be created in some live streams, and the viewers can join a group chat in the live stream via co-streaming to perform real-time audio and video communication with the streamer and other users.

### SUMMARY

In a first aspect in the disclosure, a method for live stream interaction is provided. The method includes: acquiring, at a first terminal, first information input by a first user of a live stream; presenting, in a first live streaming interface of the live stream, first media content corresponding to the first information; and presenting, in the first live streaming interface, second media content at least corresponding to second information based on the second information input by a second user of the live stream via a second terminal.

In a second aspect in the disclosure, a method for live stream interaction is provided. The method includes: presenting, at a second terminal, first media content in a second live streaming interface of a live stream, the first media content at least corresponding to first information input by a first user of the live stream via a first terminal; acquiring second information input by a second user of the live stream via a second live streaming interface; and presenting second media content corresponding to the second information in the second live streaming interface.

In a third aspect in the disclosure, an apparatus for live stream interaction is provided. The apparatus includes a first acquiring module, a first presenting module and a second presenting module, where the first acquiring module is configured to acquire, at a first terminal, first information input by a first user of a live stream; the first presenting module is configured to present, in a first live streaming interface of the live stream, first media content corresponding to the first information; and the second presenting module is configured to present, in the first live streaming interface, second media content at least corresponding to second information based on the second information input by a second user of the live stream via a second terminal.

In a fourth aspect in the disclosure, an apparatus for live stream interaction is provided. The apparatus includes a third presenting module, a second acquiring module and a fourth presenting module, where the third presenting module is configured to present, at a second terminal, first media content in a second live streaming interface of a live stream, the first media content at least corresponding to first information input by a first user of the live stream via a first terminal; the second acquiring module is configured to acquire second information input by a second user of the live stream via the second live streaming interface; and the fourth presenting module is configured to present at least second media content corresponding to the second information in the second live streaming interface.

In a fifth aspect in the disclosure, an electronic device is provided. The electronic device includes at least one processing unit; and at least one memory coupled to the at least one processing unit and storing instructions for execution by the at least one processing unit. The instructions, when executed by the at least one processing unit, cause the device to perform the method of the first aspect and/or the second aspect.

In a sixth aspect in the disclosure, a computer-readable storage medium is provided. The computer-readable storage medium stores a computer program, and the computer program is executable by the processor to implement the method of the first aspect and/or the second aspect.

It should be understood that the content described in this summary section is not intended to limit the key features or important features of the embodiments in the disclosure, nor is it intended to limit the scope of the disclosure. Other features in the disclosure will become readily understood from the following description.

### BRIEF DESCRIPTION OF DRAWINGS

The above and other features, advantages, and aspects of various embodiments in the disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments in the disclosure can be implemented;
FIG. 2A to FIG. 2K illustrate schematic diagrams of a plurality of examples of a first live streaming interface according to some embodiments in the disclosure;
FIG. 3A to FIG. 3G illustrate schematic diagrams of a plurality of examples of a second live streaming interface according to some embodiments in the disclosure;
FIG. 4A and FIG. 4B illustrate schematic diagrams of a plurality of examples of a target live streaming interface according to some embodiments in the disclosure;
FIG. 5A and FIG. 5B illustrate schematic diagrams of a plurality of examples of a target live streaming interface according to some other embodiments in the disclosure;
FIG. 6A to FIG. 6C illustrate schematic diagrams of a plurality of examples of a target live streaming interface according to some further embodiments in the disclosure;
FIG. 7 illustrates a flowchart of a method for live stream interaction according to some embodiments in the disclosure;
FIG. 8 illustrates a flowchart of a method for live stream interaction according to some other embodiments in the disclosure;
FIG. 9 illustrates a block diagram of an apparatus for live stream interaction according to some embodiments in the disclosure;
FIG. 10 illustrates a block diagram of an apparatus for live stream interaction according to some other embodiments in the disclosure; and
FIG. 11 illustrates a block diagram of an electronic device capable of implementing various embodiments in the disclosure.

### DETAILED DESCRIPTION

It may be understood that, before using the technical solutions disclosed in various implementation of the disclosure, the user should be informed of the type, scope of use, and use scenario of the personal information involved in the disclosure in an appropriate manner in accordance with relevant laws and regulations, and the user's authorization should be obtained.

For example, in response to receiving an active request from the user, prompt information is sent to the user to explicitly inform the user that the requested operation will need to acquire and use the user's personal information. Therefore, the user may independently choose, according to the prompt information, whether to provide the personal information to software or hardware such as electronic devices, applications, servers, or storage media that perform operations of the technical solutions of the disclosure.

As an optional but non-limiting implementation, in response to receiving an active request from the user, the way of sending prompt information to the user, for example, may include a pop-up window, and the prompt information may be presented in the form of text in the pop-up window. In addition, the pop-up window may also carry a selection control for the user to choose "agree" or "disagree" to provide the personal information to the electronic device.

It may be understood that the above process of notifying and obtaining the user authorization is only illustrative and does not limit the implementation of the disclosure. Other methods that satisfy relevant laws and regulations are also applicable to the implementation of the disclosure.

It may be understood that the data involved in the technical solution (including but not limited to the data itself, the acquisition or use of the data) should follow the requirements of the corresponding laws and related regulations.

The term "in response to" as used herein means a state in which a respective event occurs or condition is satisfied. It will be appreciated that the timing of a subsequent action performed in response to such event or condition is not necessarily strongly correlated with the time at which the event occurs or the condition is satisfied. For example, in some cases, subsequent actions may be performed immediately upon the event occurs or the condition holds; while in other cases, subsequent actions may be performed after a period of time elapses after the event occurs or the condition is satisfied.

Embodiments in the disclosure will be described in more detail below with reference to the accompanying drawings. While certain embodiments in the disclosure are illustrated in the accompanying drawings, it should be understood that the disclosure may be implemented in various forms, and should not be construed as limited to the embodiments set forth herein, but rather, these embodiments are provided for a more thorough and complete understanding of the disclosure. It should be understood that the drawings and embodiments in the disclosure are for example purposes only and are not intended to limit the scope of the disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments in the disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As briefly mentioned above, in the context of live streaming scenarios, users expect to have richer forms of interactions. In particular, some viewers may expect to be able to interact with streamer and/or other viewers in a live stream.

Some conventional solutions, for example, allow certain viewers to join the live streaming via co-streaming, supporting audio and video communication of the viewers in the live stream. However, whether such audio and video communication among users proceeds smoothly is highly uncertain and may negatively affect the user interaction experience.

Therefore, embodiments in the disclosure provide a solution for live stream interaction. According to various embodiments in the disclosure, at a first terminal, first information input by a first user of a live stream is acquired. First media content corresponding to the first information is presented in a first live streaming interface of the live stream. In response to second information input by a second user of the live stream via a second terminal, second media content corresponding to the second information is presented in the first live streaming interface.

In this manner, embodiments in the disclosure can support an interaction form of collaborative media content creation by a plurality of users in the live stream, thereby improving the interaction experience of the live stream. In addition, compared with traditional audio and video communication, such a collaborative creation process further lowers the threshold for user interaction, attracting more users to participate in live stream interactions.

Example embodiments in the disclosure are described below with reference to the accompanying drawings.

### Example Environment

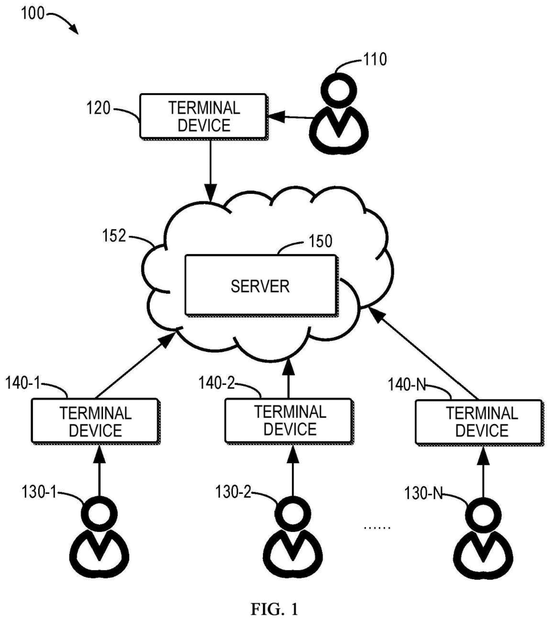

FIG. 1 illustrates a schematic diagram of an example environment 100 in which embodiments in the disclosure may be implemented. In the environment 100, a user 110 may establish a live stream and provide live streaming content and the like via an associated terminal device 120. In some scenarios, the user 110 may also be referred to as a streamer, a live streaming party or an administrator of the live stream.

One or more users 130-1, 130-2, ..., 130-N may watch live streaming and participate in interactions in the live stream via their respective associated terminal devices 140-1, 140-2, ..., 140-N. For ease of discussion, users 130 -1, 130 -2, ..., 130-N may be collectively or individually referred to as user 130, and terminal devices 140-1, 140-2, ..., 140-N may be collectively or individually referred to as terminal device 140. In some scenarios, user 130 may also be referred to as a viewer, listener, audience, or participant of a live stream.

It should be understood that although only a single streamer is shown in FIG. 1, in some embodiments, a plurality of streamers may initiate live streaming in a given live stream.

In some embodiments, terminal device 120 and terminal device 140 may be respectively provided with an application capable of providing a live streaming service, or may access a website capable of providing the live streaming service. User 110 and user 130 may operate terminal device 120 and terminal device 140 to access corresponding application or website.

Correspondingly, terminal device 120 and terminal device 140 may present corresponding live streaming interfaces, which may, for example, provide live streaming content of the live stream, for example, audio live streaming content or video live streaming content, among others.

In some embodiments, terminal device 120 and terminal device 140 may also communicate with a server 150 via a network 152, to enable the provision of the live streaming service. The server 150 may provide functionalities such as management, configuration, and maintenance of the application or website.

Terminal device 120 and terminal device 140 may be any type of mobile terminal, fixed or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, terminal devices 120, 140 can also support any type of interface for a user (such as a "wearable" circuit, etc. ). The server 150 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope in the disclosure.

Various example implementations in the disclosure will be described in detail below.

### Example Method for Live stream Interaction

According to an embodiment in the disclosure, a method for live stream interaction is provided. According to the method for interaction, a first terminal may acquire first information input by a first user of the live stream. Further, the first terminal may present, in a first live streaming interface of the live stream, first media content corresponding to the first information. Additionally, in response to second information input by a second user of the live stream via a second terminal, the first terminal presents second media content corresponding to the second information in the first live streaming interface. In some scenarios, such first information and/or second information may also be referred to as descriptive information, which may be used to indicate a description of the media content to be presented in the live streaming interface.

Such a method for live stream interaction may be implemented by a suitable electronic device or a combination of electronic devices (e.g., the server 150, terminal device 120, terminal device 140, or any combination of one or more of these devices in FIG. 1). For ease of description, terminal device 120 is taken as an example below, and the method for live stream interaction is described with reference to FIG. 1.

Referring to the example environment of FIG. 1, the live stream may include a plurality of users, such as user 110, user 130-1, user 130-2, and so on. As will be described in detail below, terminal device 120 may, for example, acquire information input by user 110 (also referred to as first information), which may include, for example, text content or other suitable content for guiding the determination of corresponding media content.

Further, terminal device 120 may correspondingly present to user 110 the first media content determined based on the first information. For example, terminal device 140 corresponding to other users 130 in the live stream may also provide the first media content in their respective live streaming interfaces. The first information may include a description of the media content to be presented. The media content may be determined based on the input information. Determining the media content may include, for example, retrieving corresponding media content from a media library, searching for matched media content from a search platform, and/or creating (e.g., generating) corresponding content using appropriate means. It should be understood that examples of "creating" media content in the disclosure may include automatically generating media content corresponding to the input information using any suitable media content generation technique.

Further, terminal device 120 may present to user 110 the second media content determined based on the first information and the second information.

In some examples, one or more other users 130 in the live stream may also participate in interaction with respect to media content creation, for example. Such one or more other users 130 may, for example, be allowed to input corresponding information (also referred to as second information) via their respective terminal devices 140.

Further, the second media content may be determined based on the information input by the a plurality of users (for example, the first information and the second information), and may be presented in the live stream, for example, in the live streaming interface by terminal device 120 and terminal device 140, respectively.

In some embodiments, the first media content, the second media content, and/or other media content collaboratively created by a plurality of users of the live stream may include: text content, image content, video content, audio content. For example, the plurality of users in the live stream may collaboratively create a story, which may be presented in the form of text content, for example. Alternatively, the plurality of users of the live stream may also collaboratively create one image or multiple images. Alternatively, the plurality of users of the live stream may also collaboratively create one or more audio pieces, such as music. As another example, the plurality of users of the live stream may collaboratively create one or more video segments.

In this manner, the embodiments in the disclosure can support a plurality of users of the live stream in collaboratively participating in the interaction of media content creation, thereby increasing user engagement in the interactions in the live stream, and enhancing interactive experience of users.

The specific process of collaborative interaction among users in the live stream will be described in detail below.

### Example Interactive mode

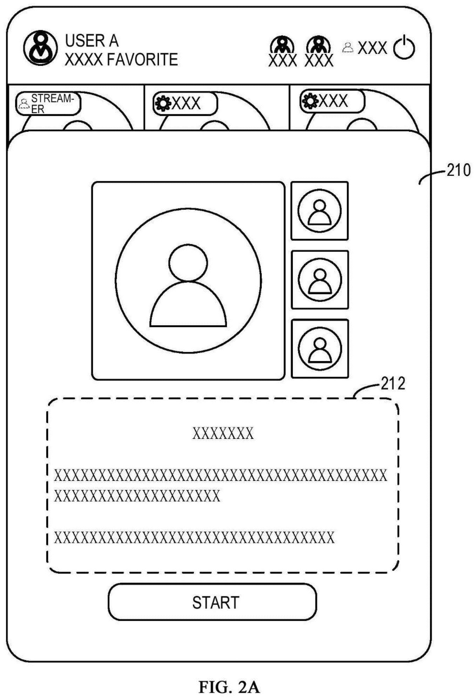

An example live streaming interface according to some embodiments in the disclosure will be described below in conjunction with FIGs. 2A-2K. Such a live streaming interfaces may correspond, for example, to the administrator (e.g., a streamer) of the live stream. FIG. 2A to FIG. 2K illustrate schematic diagrams of a plurality of example interfaces of a first live streaming interface according to some embodiments in the disclosure.

In addition, for ease of description, in the following embodiments in the disclosure will be described using images as an example of media content. It should be understood that, as described above, images are merely one example form of media content, and the interaction processes and/or interaction mechanisms discussed below in the disclosure may be appropriately applied to the collaborative creation of other types of media content.

As shown in FIG. 2A, terminal device 120 may, for example, provide an interface 210 for user 110. Such interface 210 may correspond, for example, to guiding user 110 to enter a target interactive mode (i.e., a media content creation mode).

For example, in the example of FIG. 2A, the guidance interface 210 may include guidance information 212. The guidance information 212 may provide relevant information regarding the interactive mode. Such guidance information 212 may, for example, assist user 110 in understanding the expected process of this interactive mode, as well as the basic interaction manner. In this manner, an interaction to the interactive mode can be implemented. Additionally or alternatively, terminal device 120 may, for example, automatically present the guidance information of the interactive mode in response to user 110 creating the live stream for the first time within a predetermined period of time.

As shown in FIG. 2A, the guidance interface may further include a trigger control (e.g., a "start" button) for activating the interactive mode. After receiving a preset operation for the trigger control, terminal device 120 may determine that the live stream is to initiate the interactive mode, and may accordingly perform subsequent interaction processes.

It should be understood that the interface shown in FIG. 2A is only an example of initiating the interactive mode in the live stream, and other appropriate functional entries may be used to assist the user in initiating the interactive mode.

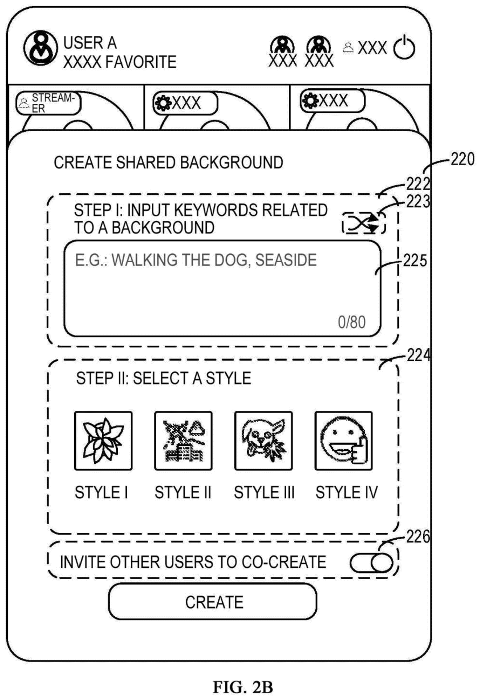

As shown in FIG. 2B, after receiving the preset operation, terminal device 120 may, for example, present an interface 220. Interface 220 may provide an information input component for user 110, for example. In some embodiments, such an information input component may, for example, include a first input area 222 for receiving text input.

Such first input area 222 may be used, for example, to receive content description parts input by user 110 for guiding the creation of corresponding media content. As shown in FIG. 2B, the first input area 222 may provide input guidance, for example, prompting the user to input one or more keywords.

Additionally, the first input area 222 may include an input box 225 in which the user may input text content. In some embodiments, the input box 225 may also present, for example, one or more keywords (e.g., "walking the dog, seaside") as recommended descriptive text (also referred to as recommendation information). In addition, user 110 may also randomly change the recommendation information presented in the input box 225 by operating a change component 223.

In some embodiments, user 110 may, for example, directly determine one or more recommended keywords as content description part for guiding the media content creation. Alternatively, user 110 may also modify the recommended keyword via the input box 225, or re-enter one or more keywords.

In some embodiments, the first input area 222 may have, for example, a character input limit, such as 80 characters. The lower right corner of the input box 225 may, for example, indicate the character input limit and the number of characters already input.

In some embodiments, the information input component may further include, for example, a second input area 224. The second input area 224 may, for example, allow user 110 to select a desired style from a set of preset styles.

As shown in FIG. 2B, using the image creation process as an example, terminal device 120 may provide a set of preset image styles and corresponding examples in the second input area 224, to facilitate user 110 to select the style of interest.

It should be understood that selecting a desired style from a set of default styles is merely an example input method, and it is also possible to support users in specifying a desired style, for example, by means of text input. The disclosure is not intended to be limited in this regard. Embodiments in the disclosure enable the determined media content to better meet user expectations.

It should be understood that for other media content creation scenarios, the layout of the second input area 224 may be adaptively adjusted. For example, using text content as an example, the second input area 224 may, for example, provide a plurality of example texts in different styles. Alternatively, using music content as an example, the second input area 224 may, for example, provide a plurality of example music clips of different styles.

Additionally, as shown in FIG. 2B, the interface 220 may also, for example, include an invitation confirmation area 226 for confirming whether to invite other users of the live stream to participate in the creation of the media content.

After user 110 completes the selection or input of the content description part and the style description part, the user may, for example, trigger the creation of the media content by clicking the "create" button in the interface 220.

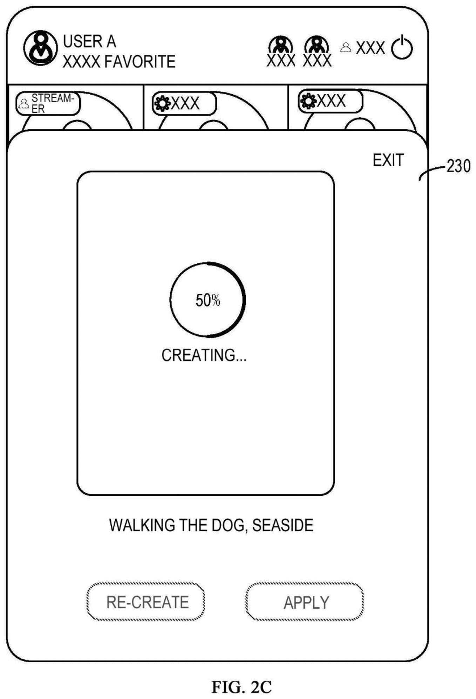

In some examples, as shown in FIG. 2C, the terminal device 120 may present interface 230 in response to user 110 clicking the "create" button. The interface 230 may include a progress bar for the media content creation (e.g., dynamically displaying current progress 50%). The progress bar may display the progress of the media content creation to the user 110. Additionally, the interface 230 may also include a previously input text description portion (e.g., "walking the dog, seaside").

In addition, the interface 230 may also provide one or more other interface elements (e.g., a "recreate" button, an "apply" button, and an "exit" button), for example. During the media content creation process, the "recreate" button and the "apply" button are greyed out. Terminal device 120 may exit the interactive mode in response to user 110 clicking the "exit" button.

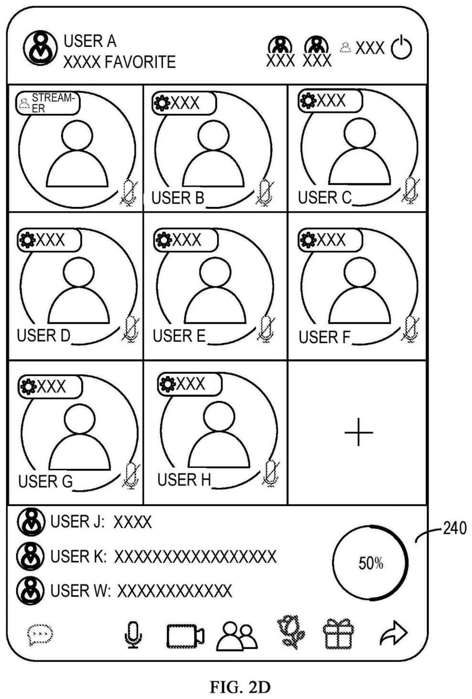

In some other examples, as shown in FIG. 2D, terminal device 120 may, for example, present the interface 240 in response to user 110 clicking the "create" button in FIG. 2B. The interface 240 includes a progress bar corresponding to the media content creation process (e.g., dynamically displaying the current progress 50%). The progress bar is presented in a floating style in an appropriate area of the live streaming interface such as a comment interaction area.

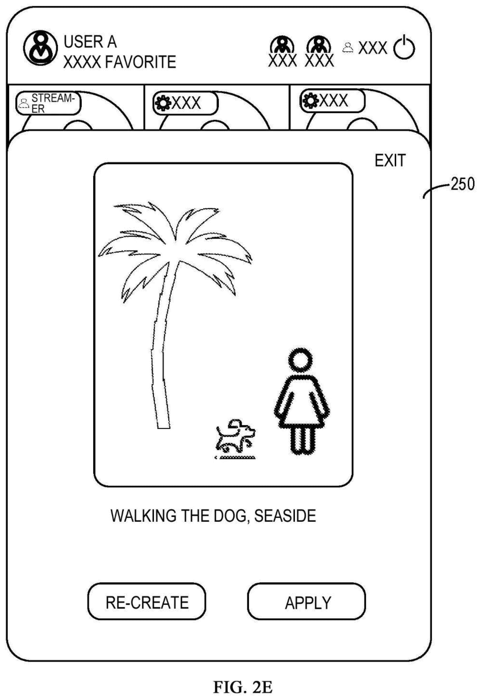

In some embodiments, terminal device 120 may present a preview interface 250 as shown in FIG. 2E in response to completing the media content creation. As shown in FIG. 2E, the preview interface 250 may include a preview of a set of created media content and previously input content description part.

By way of example, such a set of media content may include one or more candidate content (e.g., images) determined based on the information input by user 110. For example, user 110 may, for example, select a specific media content item from the set as the media content to be applied. Alternatively, if the set of media content includes only one candidate content item, user 110 may directly determine the candidate content item as the media content to be applied. Alternatively, user 110 may also trigger a re-determination of the set of media content, for example.

FIG. 2E illustrates an example preview of image content, it should be understood that for other types of media content, a preview may similarly be provided. For example, the preview interface may present created text content or support playback of the created audio and/or video content.

As shown in FIG. 2E, the interface 250 may also provide a "recreate" button and an "apply" button, for example. Terminal device 120 may trigger a media content re-creation process in response to user 110 clicking the "recreate" button. In some embodiments, different media content may be re-determined based on the previously input content description part and the selected style, i.e., the user may trigger the re-creation of the media content without modifying the information.

In some other embodiments, terminal device 120 may also support user 110 to modify the content description part or style, and then recreate different media content.

In some embodiments, terminal device 120 may present prompt information in response to failing to complete the media content creation. Terminal device 120 may exit the interactive mode based on user 110 clicking the "exit" button in the interface. Additionally or alternatively, terminal device 120 may return to the interface 220 from the interface 230 after a preset period of time for presenting the prompt information, thereby allowing user 110 to continue creating the media content by clicking the "create" button in the interface.

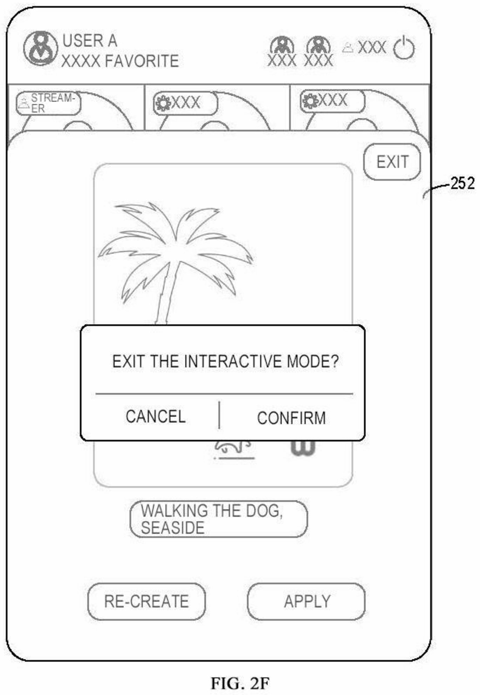

In some scenarios, terminal device 120 may exit the interactive mode in response to user 110 clicking the "Exit" button shown in FIG. 2E. In some embodiments, terminal device 120 may provide a secondary confirmation interface as shown in FIG. 2F in response to a click operation on the "exit" button. In the example of FIG. 2F, the secondary confirmation interface 252 includes a prompt window (also referred to as a floating window) for reconfirming whether to exit the interactive mode. Terminal device 120 may exit the interactive mode in response to a confirmation operation in the secondary confirmation interface.

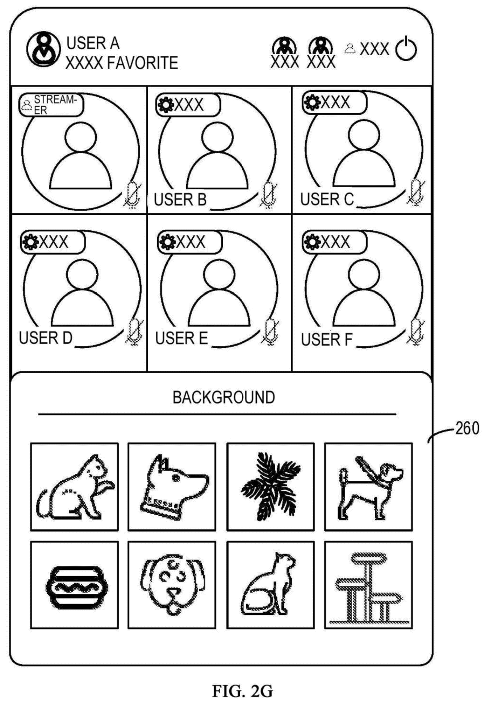

In some embodiments, the terminal device 120 may further provide a background selection interface in response to a confirmation operation in the secondary confirmation interface 250. In the example of FIG. 2G, the background selection interface 260 may include a preset number of background image options. Terminal device 120 may apply the corresponding image as the background based on the selection operation of user 110. The background selection interface 260 may also include other interface elements (e.g., a "confirm" button). Terminal device 120 may allow user 110 to perform a plurality of selection operations before finally confirming the desired image. Terminal device 120 may apply the corresponding image as the background based on a confirmation operation of user 110 (e.g., a click operation on the "confirm" button). In some embodiments, terminal device 120 may apply the selected image to the background of the live stream in a preview mode in response to a selection operation (such as a click or a tap), thereby allowing the user to preview the effect of applying the image as the background.

In other examples, terminal device 120 may cause the created media content to be presented in one or more live streaming interfaces associated with the live stream based on user 110 clicking the "apply" button shown in FIG. 2E, making it visible to all users or specific users of the live stream.

In some embodiments, the created media content may, for example, include image content, and such image content may be correspondingly set as the background of at least a portion of the live streaming interface to be presented to all users or a particular user of the live stream.

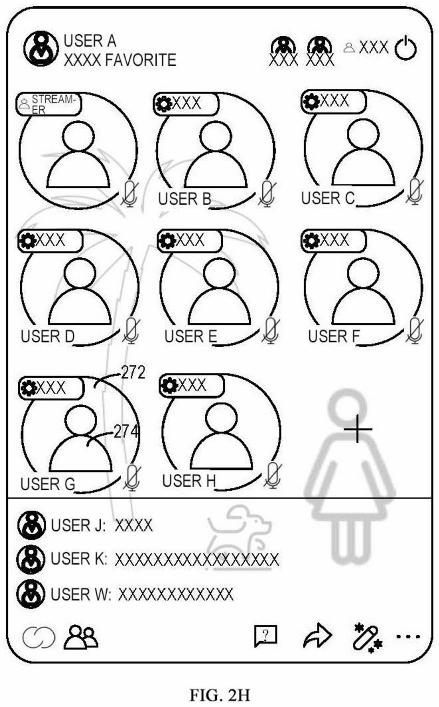

As shown in FIG. 2H, the created image may be presented in the live streaming interface as an overall background image of the live stream. For example, other information in the live stream may be presented over the background image in an overlay display manner. For example, for a live co-streaming scenario, a visual identifier (or video stream) of a co-streamer may be processed into a background portion 272 and a foreground portion 274, where the background portion 272 is further processed to be transparent (or not shown). In this manner, problems such as visual fragmentation or excessive reduction of the background image due to a large number of co-streamers can be at least partially mitigated. In some embodiments, terminal device 120 may ensure proper presentation of other content in the live stream by adjusting parameters (for example, transparency) of the created image.

In some embodiments, the created media content may also be presented in the live streaming interface via other appropriate means. For example, terminal device 120 may present a dedicated media viewing component for presenting the media content determined based on the information.

It should be understood that different types of media content may have corresponding presentation styles or provision styles. Further, the created media content may also be visible to all users of the live stream, or only to particular users in the live stream (e.g., users invited to participate in the interaction).

In the above, an example interaction process for presenting created media content based on information input by user 110 has been discussed with image creation as an example. In this manner, embodiments in the disclosure can support a combination of a content creation process and a live streaming interaction.

### Example Invitation Process

In some embodiments, user 110 may also invite or configure one or more other users 130 in the live stream to participate in the media content creation interaction.

In an example, as shown in FIG. 2B, when user 110 confirms to invite other users to participate in the interactive mode via the invitation confirmation area 226, terminal device 120 may, for example, automatically enable a co-streaming mode of the live stream, and may initiate invitations to co-streamers to participate in the interactive mode.

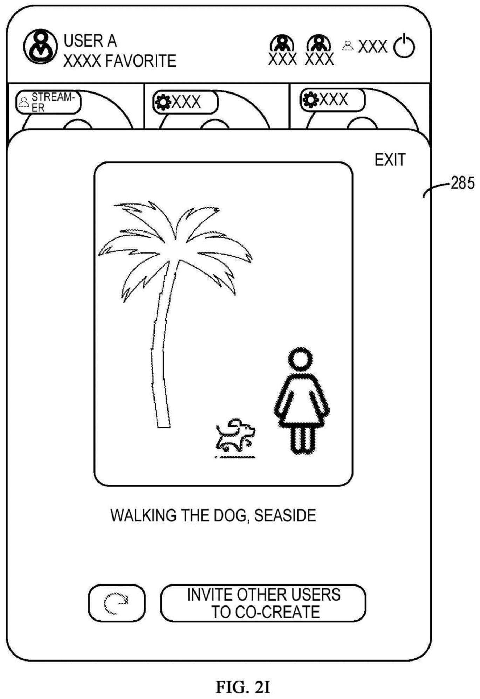

In some embodiments, terminal device 120 may also provide an entry for inviting or configuring other users to participate in the interactive mode, for example, in other appropriate interfaces. For example, as shown in FIG. 2I, terminal device 120 may provide an invitation entry (e.g., "invite other user to participate" entry) in the preview interface 285 of the created media content.

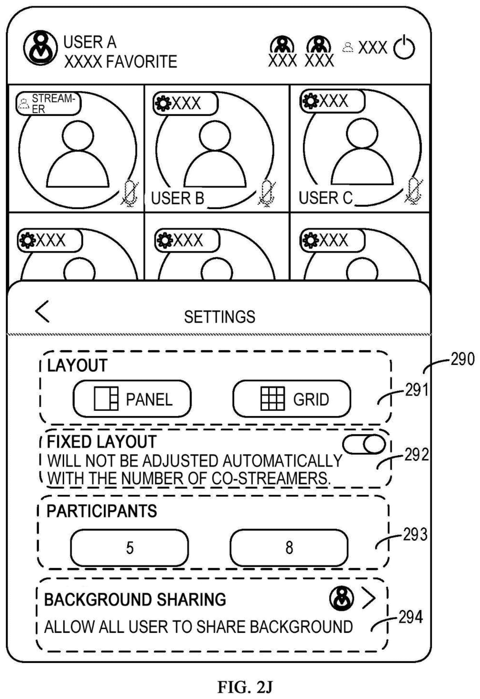

For example, after the invitation entry is triggered, terminal device 120 may present a setting interface 290 as shown in FIG. 2J. Such a setting interface 290 may be used, for example, to modify a specific setting of the interactive mode.

For example, the setting interface 290 may include a plurality of selection areas. For example, a selection area 291 for selecting a layout (e.g., a panel style layout or a grid style layout), a selection area 292 for confirming whether a layout is fixed, a selection area 293 for selecting a maximum number of co-streamers (e.g., 5 or 8), and a selection area 294 for selecting which users share the background (e.g., by clicking avatars to select a subset of co-streamers to share the background), and so on. Terminal device 120 applies to the background settings configured through these selections to all invited users participating in the interaction. In this manner, the style of the live stream can be unified.

It should be understood that such settings interface 290 may also be provided in response to other operations. For example, user 110 may also trigger the presentation of the setting interface 290 during the interaction process through a setting control and modify the setting information of the interactive mode via the setting interface.

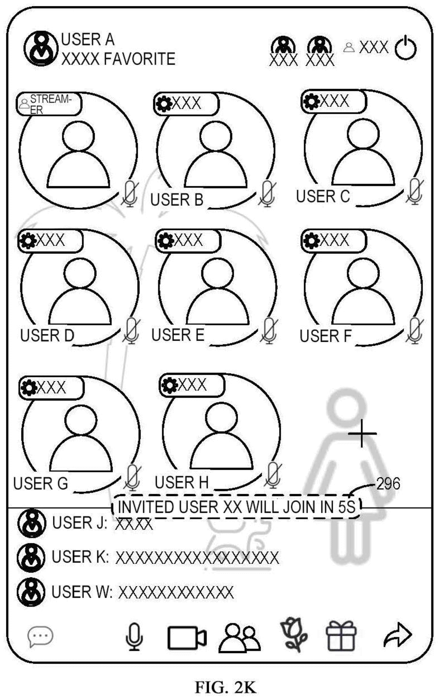

In some embodiments, as shown in FIG. 2K, terminal device 120 may further present prompt information regarding the interaction process in the live streaming interface. For example, in the case where other users are invited to join the interactive mode, terminal device 120 may present prompt information 296 in the live streaming interface, for example, the "XX user will be invited to join in 5 seconds".

It should be understood while the above describes an example process of initiating the interactive mode with reference to FIGs. 2A-2K, it should be understood that, in some scenarios, the user initiating the interactive mode may also be another appropriate user in the live stream, including but not limited to: a user with administrative privileges in the live stream, a user authorized by the streamer, a co-streamer, or another appropriate user in the live stream.

### Example Invited Interaction Process

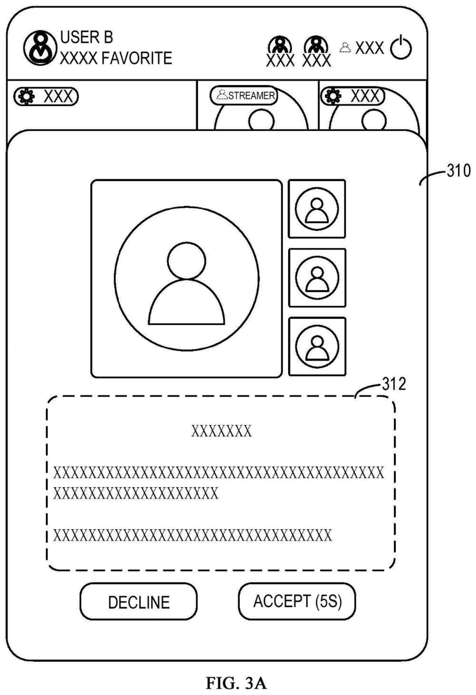

In some embodiments, one or more other users of the live stream may be invited to join to the interactive mode discussed above. The detailed process of one or more other users participating in the interaction of the live stream will be discussed below with reference to FIGs. 3A-3G. FIG. 3A to FIG. 3G illustrate schematic diagrams of a plurality of example interfaces of a second live streaming interface according to some embodiments in the disclosure.

In some embodiments, when user 130 is determined to be invited to participate in the interactive mode, terminal device 140 corresponding to user 130 may, for example, present first invitation information.

As shown in FIG. 3A, terminal device 140 may present the invited prompt information of the interactive mode. In the example of FIG. 3A, prompt interface 310 may include invited prompt information 312. The invited prompt information 312 may include information regarding the interactive mode, for example, guidance on how to participate in the interactive mode.

The prompt interface 310 may also include avatar thumbnails of one or more users who have already joined the interactive mode. In addition, the prompt interface 310 may also provide other interface elements (e.g., "decline" button and "accept" button). Terminal device 140 may invite a next user according to a preset rule (for example, a co-streaming order) in response to invited user (for example, user B) clicking the "decline" button.

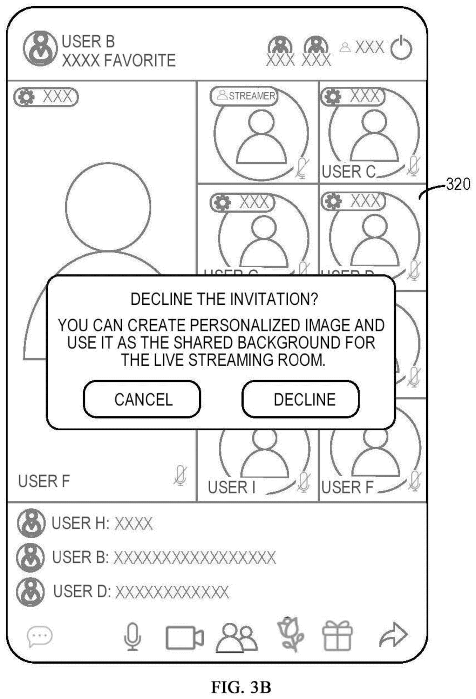

In some embodiments, terminal device 140 may present a secondary confirmation interface 320 in response to the invited user clicking the "decline" button. In the example of FIG. 3B, the secondary confirmation interface 320 includes a prompt window (also referred to as a floating window) for reconfirming whether to exit the interactive mode. The prompt window may include prompt information "Decline the invitation?" and "you can create a personalized image and use it as the shared background for the current live stream". The prompt window may also include other interface elements, such as a "cancel" button and a "decline" button. Terminal device 140 may exit the interactive mode in response to a decline operation in the secondary confirmation interface. In some embodiments, terminal device 140 may invite the next user according to the preset rule in response to the invited user not operating within a preset period of time. For example, with continued reference to FIG. 3A, the "accept" button also includes a countdown interface element (e.g., dynamically showing a 5-second countdown) to prompt the invited user to make a decision within the preset period of time. It should be understood that the content or layout of the prompt interface is merely example, and should not constitute a limitation to the disclosure.

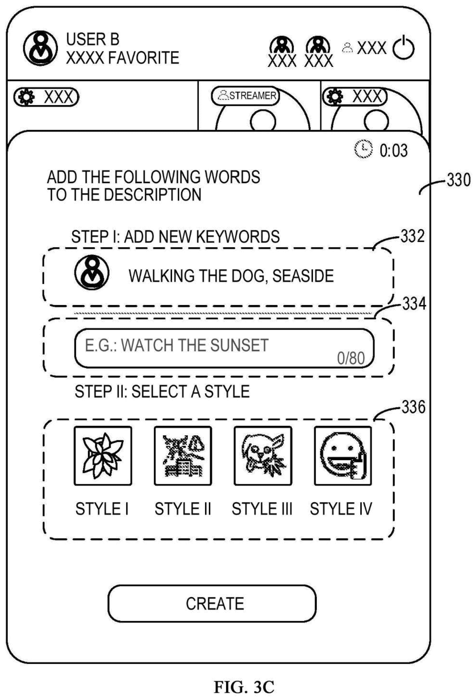

Terminal device 140 may also enter the interactive mode in response to a confirmation operation by the invited user (for example, clicking the "accept" button in FIG. 3A or clicking the "cancel" button in FIG. 3B). As shown in FIG. 3C, based on user 130 confirming the first invitation, terminal device 140 may accordingly present an interface 330 to user 130, which provides an information input component (also referred to as a second information input component) for information input.

As shown in FIG. 3C, the information input component may present at least part of the first information input by the user 110 in the information viewing area 332. Thus, the user 130 may view information previously input by the user, such as a content description part in textual form. Therefore, the user can conveniently participate in the interaction, and input of repeated content is avoided.

It should be understood that if more historical users participated in the input of the information, the information viewing area 332 may also present, for example, information input by each of the historical users.

Further, the creation interface 330 further includes a first input area 334. For example, the first input area 334 may further include an input box for acquiring content description part (for example, a keyword) input by user 130. In some embodiments, the first input area 334 has a character input limit, such as 80 characters, with a display in the bottom right corner of the input box indicating the limit and the current number of input characters.

In some embodiments, the character input limit corresponding to the first input area 334 may, for example, also be the same as the character input limit of the input box 225 in FIG. 2B. For example, the user inputting the first piece of information may be allowed to enter more characters. Alternatively, the streamer may be allowed to enter more characters.

In some embodiments, the first input area 334 may, for example, also present one or more keywords (e.g., "watch the sunset") as a recommended descriptive text (also referred to as recommendation information). In addition, user 130 may also randomly change the recommendation information presented in the first input area 334, for example.

In some embodiments, user 130 may, for example, directly determine one or more recommended keywords as content description parts for guiding the media content creation. Alternatively, user 130 may also modify the recommended keyword via the first input area 334, or re-enter one or more keywords.

In some embodiments, the second information input component may further include, for example, a second input area 336. The second input area 336 may, for example, support the user 130 in selecting a desired style from a set of preset styles.

As shown in FIG. 3C, taking the image creation process as an example, the terminal device 140 may provide a set of preset image styles and corresponding examples in the second input area 336, to facilitate user 130 to select the style of interest. In some embodiments, the set of preset styles may, for example, also be configured by user 110. For example, the invited user may select a particular style from a plurality of styles configured by the streamer.

It should be understood that selecting a desired style from a set of default styles is merely an example input method. Users may also be allowed to specify a desired style, for example, via text input, and the disclosure is not intended to be limited in this regard.

In some embodiments, as shown in FIG. 3C, the second information input component further presents countdown information. The countdown information indicates the remaining time for inputting the second information. In this manner, the sense of urgency can be enhanced, and the interaction experience of the user can be improved.

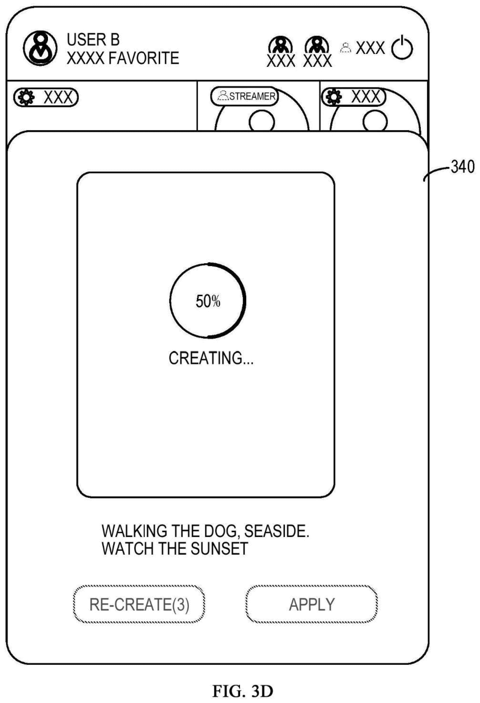

Terminal device 140 may receive information input by the invited user, and trigger creation of new media content. As shown in FIG. 3D, terminal device 140 may present the interface 340 in response to the invited user clicking the "create" button. The interface 340 may include a progress bar for the media content creation (e.g., dynamically show current progress 50%). The progress bar may indicate the progress of the creation process to the invited user.

The interface 340 may also present at least part of the information used to create the current media content. For example, the interface 340 may present content description parts (e.g., keywords "walking the dog, seaside, watch the sunset" input by user 110 and user 130) of the information previously input by all users.

In addition, the interface 340 may also provide other interface elements (e.g., a "recreate" button, an "apply" button). During the media content creation, the "recreate" button and the "apply" button are greyed out.

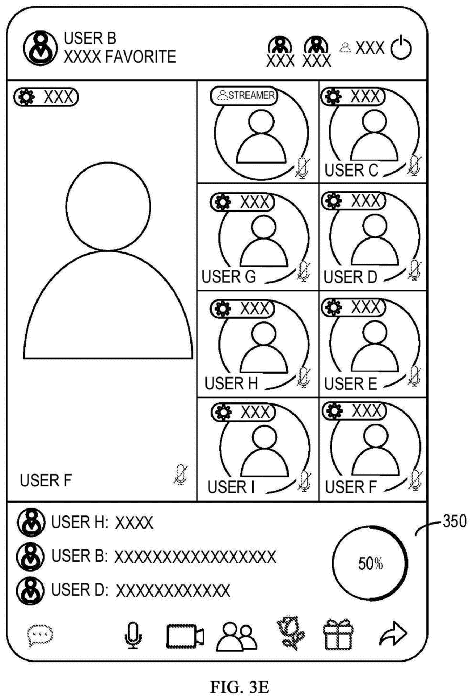

In another example, terminal device 140 may also present the interface 350 as shown in FIG. 3E in response to the invited user clicking the "create" button. The interface 350 includes a progress bar for the media content creation (e.g., dynamically shows current progress 50%). The progress bar is presented in the lower right corner of the interface in a floating style, so as not to block the user avatar or comment area. It should be understood that the content and style of the prompt information of the creation progress are merely examples and not limiting.

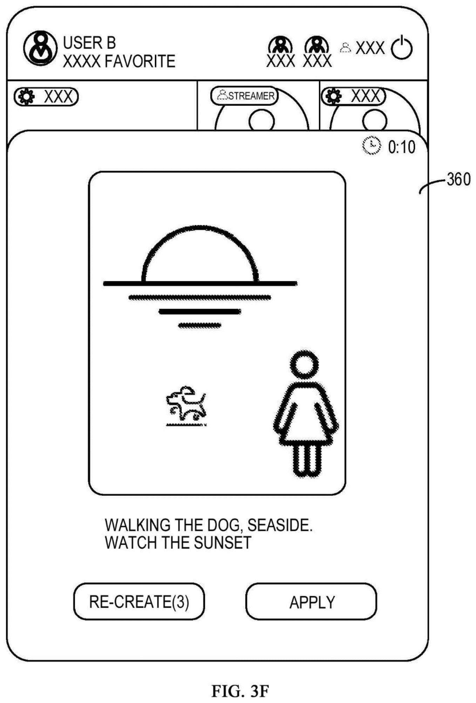

In some embodiments, terminal device 140 may present a preview interface 360 as shown in FIG. 3F in response to completing the media content creation. As shown in FIG. 3F, the preview interface 360 may include a preview of a set of created media content and corresponding descriptive content (e.g., keywords input by all users).

For example, such a set of media content may include one or more candidate content items (e.g., images) determined based on the information input by user 110 and user 130. For example, user 130 may select specific media content item in the set of media content as the media content to be applied. Alternatively, if only one candidate content item is included in the set of media content, user 130 may also directly determine the candidate content item as the media content to be applied. Alternatively, user 130 may also trigger a recreation of the set of media content, for example.

FIG. 3F illustrates an example preview of image content, it being understood that for other types of media content, previews may similarly be provided. For example, the preview interface may present the created text content, or support the user in playing the created audio content and/or video content.

Further, as shown in FIG. 3F, the interface 360 may also provide a "recreate" button and an "apply" button, for example. Terminal device 140 may trigger a re-creation process of the media content in response to user 130 clicking the "recreate" button. In some embodiments, different media content may be re-determined based on the previously input content description parts and the selected style, i.e., the user may trigger the re-creation of the media content without modifying the information.

In some other embodiments, terminal device 140 may also support user 130 in modifying the content description part or style, and then recreating different media content. Additionally or alternatively, the number of times media content can be recreated may be limited, such as 3 times. In this manner, the progress and efficiency of the interactive mode may be advanced.

In some examples, the number of times of recreations permitted for the invited user may be, for example, less than the number of times permitted for the streamer (or the user initiating the interactive mode).

Additionally, as shown in FIG. 3F, the interface 360 may also include a countdown interface element (e.g., dynamically showing a 10-second countdown) to prompt the invited user to make a selection within a preset period of time. For example, if the countdown ends and the invited user does not make a selection, the currently presented media content may be directly determined as the second media content to be applied, for example.

In some embodiments, terminal device 140 may further present prompt information in response to failing to complete the creation of the image. For example, if the image creation fails, terminal device 140 may present prompt information such as "System Busy, please try again later".

Continuing with the example of FIG. 3F, terminal device 140 may cause the selected media content (also referred to as second media content) to be presented in one or more live streaming interfaces associated with the live stream based on the invited user clicking the "apply" button, making it visible to all users or specific users of the live stream.

In some embodiments, the created media content may include, for example, image content, and such image content may accordingly be set as the background of at least a portion of the live streaming interface, to be presented to all users or particular users in the live stream.

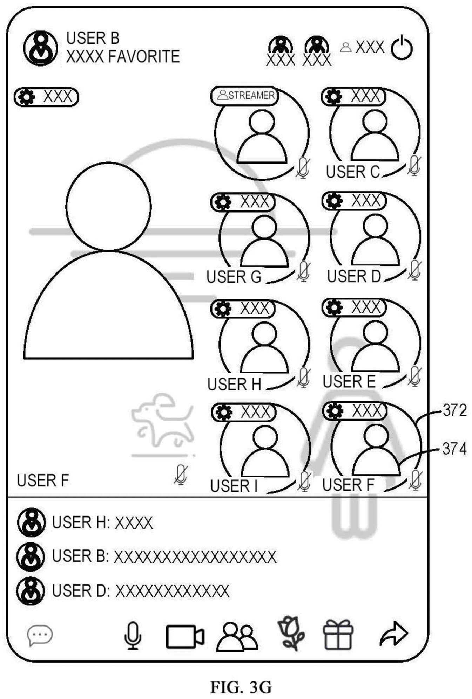

As shown in FIG. 3G, the created image may be presented in the live streaming interface as the overall background image of the live stream. For example, other information in the live stream may be presented over the background image in an overlay manner. For example, for a live co-streaming scenario, a visual identifier (or a video stream) of a co-streamer may be processed into a background portion 372 and a foreground portion 374 (for example, an area corresponding to a user's head), where the background portion 372 (for example, a background area in the video stream other than the user's head) is further processed to be transparent (or not shown). In this manner, problems such as visual fragmentation or excessive reduction of the background image due to a large number of co-streamers can be at least partially mitigated. In some embodiments, terminal device 120 may ensure proper presentation of other content in the live stream by adjusting parameters (for example, transparency) of the created image.

In some embodiments, the created media content may also be presented in the live streaming interface in other appropriate means. For example, terminal device 140 may present a dedicated media viewing component for presenting the media content determined based on the information.

It should be understood that different types of media content may have corresponding presentation styles or provision styles. In addition, the created media content may also be visible to all users of the live stream, or only for particular users in the live stream (e.g., users invited to participate in the interaction).

In the above, an example interaction process for presenting created media content based on user 110 and user 130 interaction has been with image creation as an example. In this manner, embodiments in the disclosure facilitate user interactions within a live stream by enabling collaborative creation of media content in a "relay" manner, with the content presented accordingly in the live stream.

In some embodiments, more users may be invited based on similar process to continue the creation of media content based on information previously input by the user. Such invited users may include, for example, a group of users with specific permissions in the live stream. For example, such invited users may be, for example, a group of users with co-streaming permissions in the live stream.

Further, the invitation order of the interactive mode, i.e., the sequence of collaborative creation input of the media content may also be determined based on an order in which the group of users possesses the preset permissions. For example, a plurality of co-streamers may be invited sequentially to participate in the media content creation according to the order of the co-streaming, until all co-streamers have participated in the creation process.

For example, after the second user of the live stream completes the interaction, the third terminal associated with a third user of the live stream may be further presented with the second invitation information. Further, in response to the confirmation of the second invitation information by the third user, the third terminal may present a third information input component for receiving third information input by the third user. Further, the third media content may be presented in one or more live streaming interfaces associated with the live stream, where the third media content is determined based on the first information, the second information, and the third information. For the input process of the third information, refer to the input process of the foregoing second information, and details are not described herein again.

Conversely, in response to a decline of the second invitation information by the third user, the fourth terminal associated with a fourth user of the live stream may be accordingly presented with third invitation information, inviting the fourth user to participate in the interaction.

### Viewing of Media Content

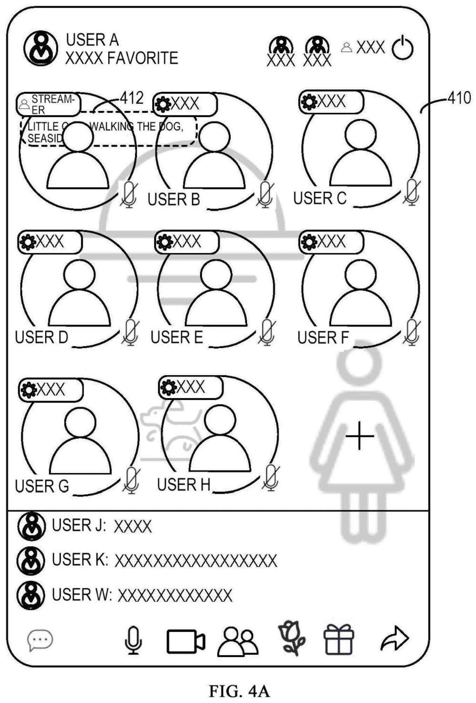

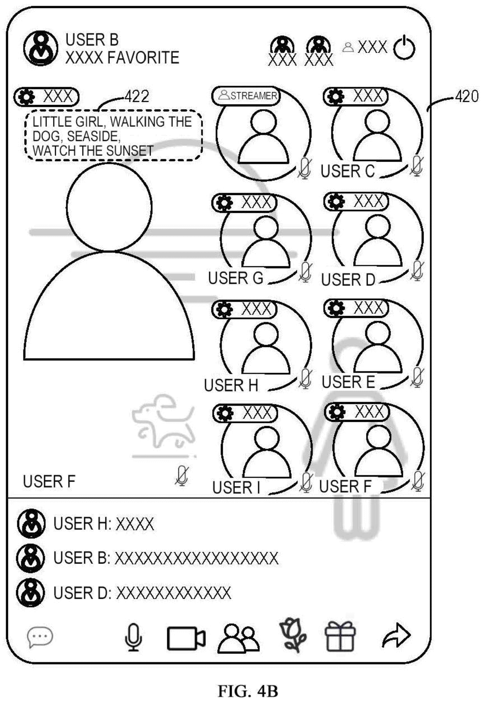

In some embodiments, an appropriate user (e.g., all users or users with permission) in the live stream may also view the media content created in the above interactive mode via a target live streaming interface. Such a target live streaming interface may be an interface seen by any appropriate user in the live stream, including but not limited to: a streamer, a user participating in the interactive mode, and/or other common users. FIG. 4A and FIG. 4B illustrate schematic diagrams of a plurality of example interfaces of the target live streaming interface according to some embodiments in the disclosure.

As shown in FIG. 4A, in some scenarios, in cases where a corresponding media content item is applied to the live stream by a relevant user, an appropriate user (including a user participating in or not participating in the interactive mode) in the live stream may view such media content via the target live streaming interface 410.

For example, the created image may also be set as the background of at least a portion of the live streaming interface corresponding to viewers of the live stream. Additionally, the terminal device may also present at least a portion of the information associated with the presented media content in the live streaming interface.

As shown in FIG. 4A, the interface 410 may present at least a portion 412 of the information used to create the image in association with the image that is applied as the background of the live stream. Such a portion 412 may, for example, be the content description part in the information, for example, one or more keywords used to guide image creation (for example, a keyword "walking the dog, seaside" input by user 110).

Additionally, in cases where the current media content is determined based on information input by a plurality of users, the terminal device may also present at least a portion of all the information, for example, all content description parts in association with the media content.

As shown in FIG. 4B, in the interface 420, the image determined based on the information input by user 110 and user 130 is applied as the background of the live stream. Further, the terminal device may present all the user-input content 422 (for example, a keyword "walk a dog, a seaside, watch the sunset") in association with the image.

Therefore, the embodiment in the disclosure allow other users to more conveniently understand the collaborative creation process of the current media content.

In some embodiments, the terminal device may further provide a viewing entry for appropriate users in the live stream (including users participating in or not participating in the interactive mode) to view a set of media content (for example, the first media content, the second media content, and/or other more media content discussed above) determined based on the interactive mode in the live stream.

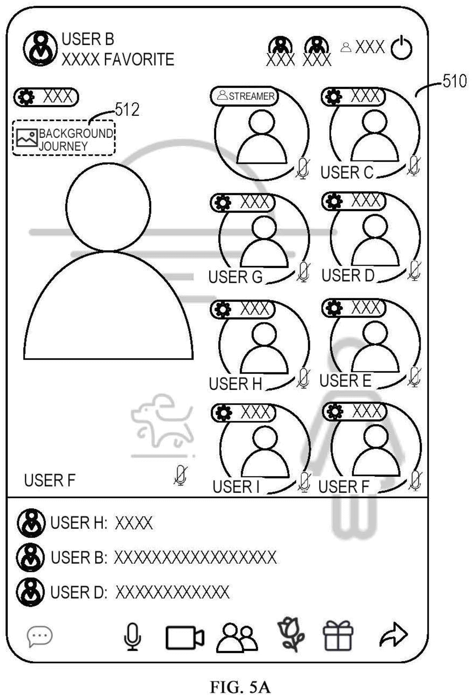

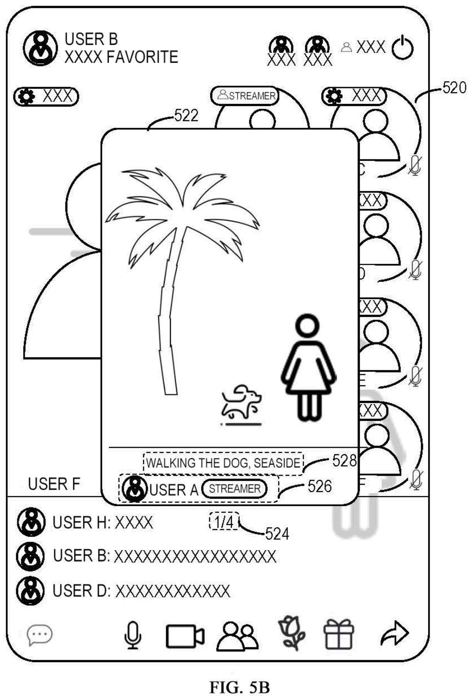

FIG. 5A and FIG. 5B illustrate schematic diagrams of a plurality of examples of a target live streaming interface according to some other embodiments in the disclosure. As shown in FIG. 5A, the terminal device may present an interface 510 to appropriate users in the live stream. The interface 510 includes a viewing entry 512. The terminal device may present all the media content determined during the interaction process based on a preset user operation on the viewing entry 512, thereby allowing users to more conveniently understand the creation process of the current media content and the user interactions.

In some embodiments, the terminal device may present a target media content in the set of media content in the target live streaming interface. For example, the terminal device may present, in the interface 520, the first media content created in the interactive mode or the latest media content applied. Additionally, the terminal device may switch to presenting another media content in the set of media content in response to receiving a switching operation.

For example, the terminal device presents an interface 520 shown in FIG. 5B in response to a click operation performed by a user (for example, user B) on the viewing entry in FIG. 5A. The interface 520 may first present a first image (for example, an image created by the streamer) of the plurality of images 522 (for example, 4 images) created in the interaction process. Further, the terminal device may switch, in response to a finger swipe operation of user B, to displaying another created image (for example, an image created by another user after the streamer). In some embodiments, the order of switching the media content may be determined, for example, based on the order in which the media content were created.

In some embodiments, the terminal device may further present at least a portion of target information used to create the target media content and/or identification information of the target user in association with the target media content, where the target user is the input party of the target information corresponding to the target media content. For example, as shown in FIG. 5B, the interface 520 may also present identification information 526 of the user (for example, "User A (streamer)") that input the description information used to determine the image. In addition, the interface 520 further includes a content description part 528 of the information corresponding to the creation of the image, for example, a keyword "walking the dog, seaside".

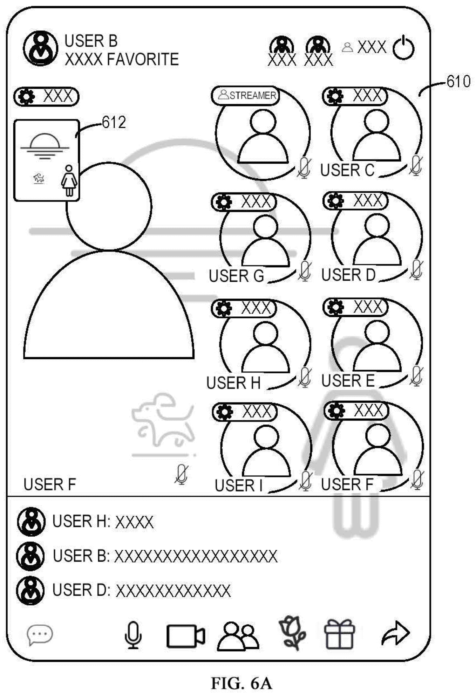

FIG. 6A to FIG. 6C illustrate schematic diagrams of a plurality of example interfaces of a target live streaming interface according to some other embodiments in the disclosure. The target live streaming interface is, for example, the live streaming interface presented to some or all users in the live stream.

In the interface 610 shown in FIG. 6A, in some embodiments, the viewing entry 612 may also be configured to present a preview of at least one media content item from the set of media content. For example, the viewing entry 612 may present a preview image of one of the images created during the interaction process. Additionally or alternatively, the viewing entry 612 may present a preview image of the images created during the interaction process, and the images are presented in a overlapping style.

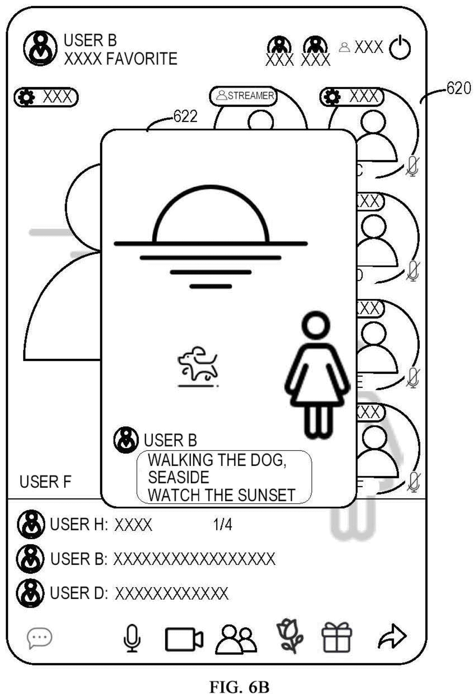

Further, after receiving the a of the viewing entry 612, the terminal device may present the interface 620 as shown in FIG. 6B. For example, the interaction logic of the interface 620 may be similar to the interface 520 shown in FIG. 5B, and details are not described herein again.

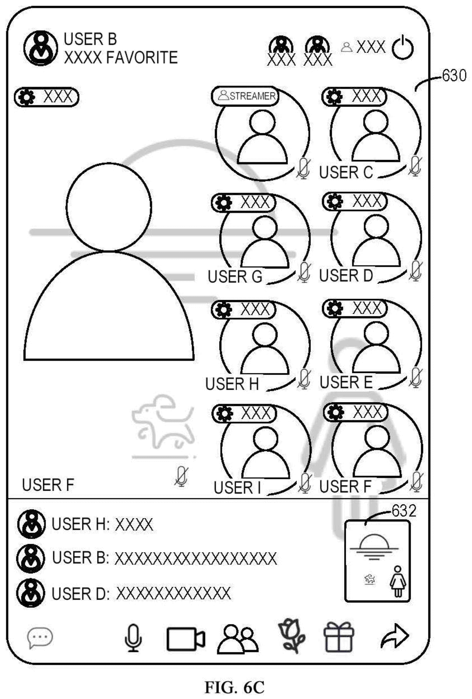

In other embodiments, as shown in the interface 630 shown in FIG. 6C, the viewing entry 632 may also be presented in other appropriate areas in the live streaming interface. For example, the viewing entry 632 may be presented in a comment interaction area of the live stream.

Based on the process described above, on one hand, some users in the live stream can participate in the collaborative creation of media content, thereby enhancing the interactive experience among users; on the other hand, other appropriate users in the live stream can also view the media content collaboratively created through such a process and conveniently understand the detailed "relay" style creation history of the media content, thus enhancing the overall interactive experience.

It should be appreciated that although the above description uses images as an example for describing how other users view created media content, similar viewing mechanisms can also be applied to other types of media content, such as text, video, or audio content.

### Example Processes

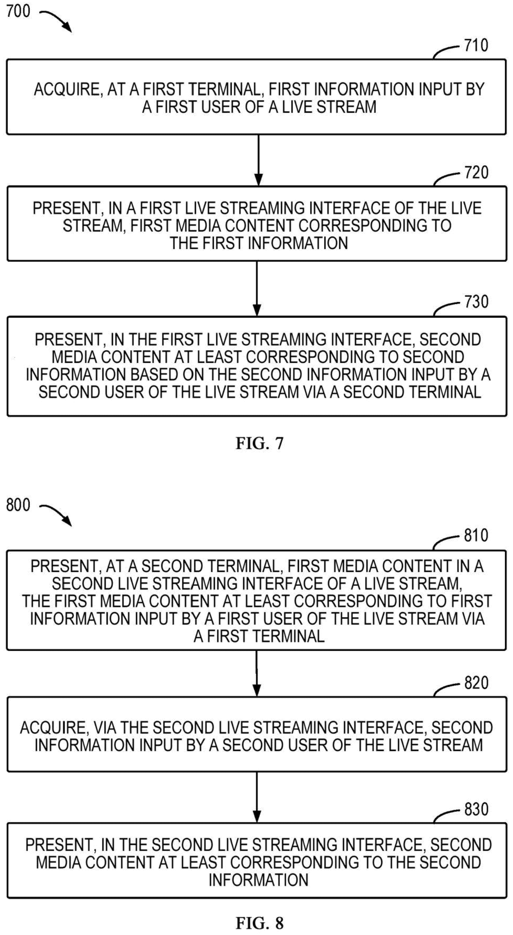

FIG. 7 illustrates a flowchart of a method 700 for live stream interaction according to some embodiments in the disclosure. The method 700 may be implemented by a first terminal (e.g., terminal device 120 in FIG. 1). The method 700 is described below with reference to FIG. 1.

In block 710, the first terminal acquires first information input by a first user of a live stream. In block 720, the first terminal presents, in a first live streaming interface of the live stream, first media content corresponding to the first information. In block 730, the first terminal presents, in the first live streaming interface, second media content at least corresponding to second information based on the second information input by a second user of the live stream via a second terminal.

In some embodiments, presenting, in the first live streaming interface, the second media content corresponding to the second information in the first live streaming interface includes: presenting the second media content determined based at least on the first information and the second information.

In some embodiments, acquiring the first information input by the first user of the live stream includes: providing a first information input component in response to receiving a first preset operation, where the first preset operation indicates an activation of a target interactive mode of the live stream; and receiving the first information input by the first user via the first information input component.

In some embodiments, the first information input component further presents recommendation description information, and the first information input component further includes a modifying component for changing the recommendation description information.

In some embodiments, presenting the first media content corresponding to the first information in the first live streaming interface of the live stream includes: presenting a first set of candidate content, the first set of candidate content determined based on the first information; and presenting, based on a second preset operation for the first set of candidate content, the first media content determined based on the first information.

In some embodiments, the second preset operation for the first set of candidate content includes any one of: an operation of confirming the first set of candidate content as the first media content, an operation of selecting the first media content from the first set of candidate content, and an operation of recreating the first set of candidate content.

In some embodiments, the process 700 further includes causing the second terminal to present first invitation information; and causing the second terminal to provide a second information input component for receiving the second information input by the second user based on a confirmation of the first invitation information by the second user.

In some embodiments, the second information input component further presents at least a portion of first description information.

In some embodiments, the second information input component further presents countdown information, the countdown information indicating a remaining time for inputting second description information.

In some embodiments, presenting the second media content in the first live streaming interface based on the second information input by the second user of the live stream via the second terminal includes: causing the second terminal to present the second set of candidate content, the second set of candidate content corresponding to the first information and the second information; and presenting, by the first terminal in the first live streaming interface, at least the second media content corresponding to the first information and the second information based on a third preset operation for the second set of candidate content.

In some embodiments, the preset operation for the second set of candidate content includes any one of: an operation of confirming the second set of candidate content as the second media content, an operation of selecting the second media content from the second set of candidate content, and an operation of recreating the second set of candidate content.

In some embodiments, the process 700 further includes causing the second terminal to stop providing an option for recreating the second set of candidate content in response to a number of times the operation of recreating the second set of candidate content performed being greater than a threshold.

In some embodiments, the process 700 further includes: causing a third terminal associated with a third user of the live stream to present second invitation information; causing the third terminal to present a third information input component for receiving third information input by the third user in response to a confirmation of the second invitation information by the third user; and presenting third media content in the first live streaming interface, the third media content at least corresponding to the first information, the second information, and the third information.

In some embodiments, the process 700 further includes: causing a fourth terminal associated with a fourth user of the live stream to present third invitation information in response to a decline of the second invitation information by the third user.

In some embodiments, the process 700 further includes: presenting, in the first live streaming interface of the live stream, at least a portion of the first information in association with the first media content; and/or presenting, in the first live streaming interface of the live stream, at least a portion of both the first information and the second information in association with the second media content.

In some embodiments, process 700 further includes: causing a target live streaming interface associated with the live stream to provide a viewing entry; and causing the target live streaming interface to present a set of media content in response to a fourth preset operation for the viewing entry, the set of media content including at least the first media content and the second media content.

In some embodiments, causing the target live streaming interface to present the set of media content includes: causing the target live streaming interface to present target media content in the set of media content; and causing the target live streaming interface to switch to presenting other media content in the set of media content in response to receiving a switching operation.

In some embodiments, the process 700 further includes: causing the target live streaming interface to present in association with the target media content: at least a portion of the target information used to create the target media content, and/or identification information of a target user corresponding to the target media content, where the target user is an input party of the target information corresponding to the target media content.

In some embodiments, the viewing entry is configured to present a preview of at least one media content item of the set of media content.

In some embodiments, the first user corresponds to an administrator of the live stream, and/or the second user is determined from a group of users having preset permissions in the live stream.

In some embodiments, the second user is determined based on an order in which the group of users are configured with the preset permissions.

In some embodiments, the preset permission includes a co-streaming permission of the live stream.

In some embodiments, the first media content and/or the second media content includes at least one of: text content, image content, video content, and audio content.

In some embodiments, the first media content and/or the second media content are presented as a background of at least a portion of the area of the first live streaming interface.

In some embodiments, the first description information and/or the second description information includes a content description part and a style description part.

In some embodiments, the style description part is selected from a set of preset styles.

FIG. 8 illustrates a flowchart of a method 800 for live stream interaction according to some embodiments in the disclosure. The method 800 may be implemented by a second terminal (e.g., the terminal device 140 in FIG. 1). The method 800 is described below with reference to FIG. 1.

In block 810, the second terminal presents first media content in a second live streaming interface of a live stream, where the first media content at least corresponds to first information input by a first user of the live stream via a first terminal. In block 820, the second terminal acquires second information input by a second user of the live stream via the second live streaming interface. At block 830, the second terminal presents at least second media content corresponding to the second information in the second live streaming interface.

In some embodiments, presenting the second media content in the second live streaming interface includes presenting the second media content determined based at least on the first information and the second information.

In some embodiments, acquiring the second information input by the second user of the live stream includes: presenting first invitation information, the first invitation information generated based on a preset operation of the first user; providing a second information input component based on a confirmation of the first invitation information by the second user; and receiving the second information input by the second user via the second information input component.

In some embodiments, the second information input component further presents at least a portion of the first description information.

In some embodiments, the second information input component further presents countdown information, the countdown information indicating a remaining time for inputting second description information.

In some embodiments, presenting the second media content in the second live streaming interface includes: presenting a second set of candidate content, the second set of candidate content created based on the first description information and the second description information; and presenting, based on a third preset operation for the second set of candidate content, the second media content created based on the first description information and the second description information.

In some embodiments, the third preset operation for the second set of candidate content includes one of: an operation of confirming the second set of candidate content as the second media content, an operation of selecting the second media content from the second set of candidate content, and an operation of recreating the second set of candidate content.

In some embodiments, the process 800 further includes stopping providing an option for recreating the second set of candidate content in response to a number of times the operation of recreating the second set of candidate content performed being greater than a threshold.

In some embodiments, the process 800 further includes: causing a third terminal associated with a third user of the live stream to present second invitation information; causing the third terminal to present a third information input component for receiving third information input by the third user in response to a confirmation of the second invitation information by the third user; and presenting third media content in the first live streaming interface, the third media content at least corresponding to the first information, the second information, and the third information.

In some embodiments, the process 800 further includes: causing a fourth terminal associated with a fourth user of the live stream to present third invitation information in response to a decline of the second invitation information by the third user.

In some embodiments, the process 800 further includes: presenting, in the second live streaming interface of the live stream, at least a portion of the first information in association with the first media content; and/or presenting, in the second live streaming interface of the live stream, at least a portion of both the first information and the second information in association with the second media content.

In some embodiments, process 800 further includes: causing a target live streaming interface associated with the live stream to provide a viewing entry; and causing the target live streaming interface to present a set of media content responsive to a fourth preset operation for the viewing entry, the set of media content including at least the first media content and the second media content.

In some embodiments, causing the target live streaming interface to present the set of media content includes: causing the target live streaming interface to present target media content in the set of media content; and causing the target live streaming interface to switch to presenting other media content in the set of media content in response to receiving a switching operation.

In some embodiments, the process 800 further includes: causing the target live streaming interface to present in association with the target media: at least a portion of target information used to determine the target media content, and/or identification information of a target user corresponding to the target media content, wherein the target user is an input party of the target information corresponding to the target media content.

In some embodiments, the viewing entry is configured to present a preview of at least one media content item of the set of media content.

In some embodiments, the first user corresponds to an administrator of the live stream, and/or the second user is determined from a group of users having preset permissions in the live stream.

In some embodiments, the second user is determined based on an order in which the group of users are configured with the preset permissions.

In some embodiments, the preset permission includes a co-streaming permission of the live stream.

In some embodiments, the first media content and/or the second media content includes at least one of: text content, image content, video content, and audio content.

In some embodiments, the first media content and/or the second media content are presented as a background of at least a portion of the area of the first live streaming interface.

In some embodiments, the first description information and/or the second description information includes a content description part and a style description part.

In some embodiments, the style description part is selected from a set of preset styles.

### Example Apparatus and Device

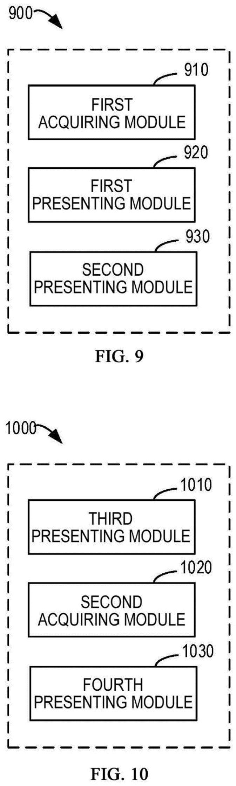

FIG. 9 is a schematic structural block diagram of an apparatus 900 for live stream interaction according to some embodiments in the disclosure. The apparatus 900 may be implemented or included in a first terminal (e.g., the terminal device 120 in FIG. 1). The various modules/components in the apparatus 900 may be implemented by hardware, software, firmware, or any combination thereof.

As shown, the apparatus 900 includes a first acquiring module 910, configured to acquire, at a first terminal, first information input by a first user of a live stream. The apparatus 900 further includes a first presenting module 920 configured to present, in a first live streaming interface of the live stream, first media content corresponding to the first information. The apparatus 900 further includes a second presenting module 930, configured to present, in the first live streaming interface, second media content at least corresponding to second information based on the second information input by a second user of the live stream via a second terminal.

In some embodiments, the second presenting module 930 is further configured to present, in the first live streaming interface, the second media content determined based at least on the first information and the second information.

In some embodiments, the first acquiring module 910 is configured to, provide a first information input component in response to receiving a first preset operation, where the first preset operation indicates an activation of a target interactive mode of the live stream; and receive the first information input by the first user via the first information input component.

In some embodiments, the first information input component further presents recommendation description information, and the first information input component further includes a modifying component for changing the recommendation description information.

In some embodiments, the first presenting module is configured to present a first set of candidate content, the first set of candidate content determined based on the first information; and present, based on a second preset operation for the first set of candidate content, the first media content determined based on the first information.

In some embodiments, the second preset operation for the first set of candidate content includes any one of: an operation of confirming the second set of candidate content as the first media content, an operation of selecting the first media content from the first set of candidate content, and an operation of recreating the first set of candidate content.

In some embodiments, the apparatus 900 further includes a first invitation information presenting module configured to cause the second terminal to present first invitation information; and a second information input component providing module configured to provide a second information input component for receiving the second information input by the second user based on a confirmation of the first invitation information by the second user.

In some embodiments, the second information input component further presents at least a portion of the first description information.

In some embodiments, the second information input component further presents countdown information, the countdown information indicating a remaining time for inputting second description information.

In some embodiments, the second presenting module is configured to second terminal to present the second set of candidate content, the second set of candidate content corresponding to the first information and the second information; and present, by the first terminal in the first live streaming interface, at least the second media content corresponding to the first information and the second information based on a third preset operation for the second set of candidate content.

In some embodiments, the preset operation for the second set of candidate content includes any one of: an operation of confirming the second set of candidate content as the second media content, an operation of selecting the second media content from the second set of candidate content, and an operation of recreating the second set of candidate content.

In some embodiments, the apparatus 900 further includes a stopping module configured to, cause the second terminal to stop providing an option for recreating the second set of candidate content in response to a number of times the operation of recreating the second set of candidate content performed being greater than a threshold.

In some embodiments, the apparatus 900 further includes a second invitation information presenting module configured to cause a third terminal associated with a third user of the live stream to present second invitation information; a third information input component presenting module configured to cause the third terminal to present a third information input component for receiving third information input by the third user in response to the confirmation of the second invitation information by the third user; and a third media content presenting module configured to present third media content in the first live streaming interface, the third media content at least corresponding to the first information, the second information, and the third information.

In some embodiments, the apparatus 900 further includes a third invitation information presenting module configured to, cause a fourth terminal associated with a fourth user of the live stream to present third invitation information in response to a decline of the second invitation information by the third user.

In some embodiments, the apparatus 900 further includes a partial presenting module configured to present , in the first live streaming interface of the live stream, at least a portion of the first information in association with the first media content; and/or present, in the first live streaming interface of the live stream, at least a portion of both the first information and the second information in association with the second media content.

In some embodiments, the apparatus 900 further includes a viewing entry providing module configured to cause a target live streaming interface associated with the live stream to provide a viewing entry; and a set of media content presenting modules configured to cause the target live streaming interface to present a set of media content in response to a fourth preset operation for the viewing entry, the set of media content including at least the first media content and the second media content.

In some embodiments, the set of media content presenting modules is further configured to cause the target live streaming interface to present target media content in the set of media content; and cause the target live streaming interface to switch to presenting other media content in the set of media content in response to receiving a switching operation.

In some embodiments, the set of media content presenting modules is further configured to cause the target live streaming interface to present in association with the target media content: at least a portion of the target information used to create the target media content, and/or identification information of a target user corresponding to the target media content, where the target user is an input party of the target information corresponding to the target media content.

In some embodiments, the viewing entry is configured to present a preview of at least one media content item of the set of media content.

In some embodiments, the first user corresponds to an administrator user of the live stream, and/or the second user is determined from a group of users having preset permissions in the live stream.

In some embodiments, the second user is determined based on an order in which the group of users are configured with the preset permissions.

In some embodiments, the preset permission includes a co-streaming permission of the live stream.

In some embodiments, the first media content and/or the second media content includes at least one of: text content, image content, video content, and audio content.

In some embodiments, the first media content and/or the second media content are presented as a background of at least a portion of the area of the first live streaming interface.

In some embodiments, the first description information and/or the second description information includes a content description part and a style description part.

In some embodiments, the style description part is selected from a set of preset styles.

The modules included in the apparatus 900 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the modules in the apparatus 900 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 10 is a schematic structural block diagram of an apparatus 1000 for interacting with a live stream according to some embodiments in the disclosure. The apparatus 1000 may be implemented or included in a second terminal (e.g., the terminal device 140 in FIG. 1). The various modules/components in the apparatus 1000 may be implemented by hardware, software, firmware, or any combination thereof.

As shown in the figure, the apparatus 1000 includes a third presenting module 1010, configured to present first media content in a second live streaming interface of a live stream, where the first media content at least corresponds to first information input by a first user of the live stream via a first terminal. The apparatus 1000 further includes a second acquiring module 1020, configured to acquire second information input by a second user of the live stream via the second live streaming interface. The apparatus 1000 further includes a fourth presenting module 1030 configured to present at least second media content corresponding to the second information in the second live streaming interface.

In some embodiments, the fourth presenting module 1030 is further configured to present, in the first live streaming interface, the second media content determined based at least on the first information and the second information.

In some embodiments, the second acquiring module 1020 is configured to present first invitation information, the first invitation information generated based on a preset operation of the first user; provide a second information input component based on a confirmation of the first invitation information by the second user; and receive the second information input by the second user via the second information input component.

In some embodiments, the second information input component further presents at least a portion of the first description information.

In some embodiments, the second information input component further presents countdown information, the countdown information indicating a remaining time for inputting second description information.

In some embodiments, the fourth presenting module 1030 is configured to present a second set of candidate content, the second set of candidate content created based on the first description information and the second description information; and present, based on a third preset operation for the second set of candidate content, the second media content created based on the first description information and the second description information.

In some embodiments, the third preset operation for the second set of candidate content includes one of: an operation of confirming the second set of candidate content as the second media content, an operation of selecting the second media content from the second set of candidate content, and an operation of recreating the second set of candidate content.

In some embodiments, the apparatus 1000 further includes a stopping module configured to stop providing an option for recreating the second set of candidate content in response to a number of times the operation of recreating the second set of candidate content performed being greater than a threshold.

In some embodiments, the apparatus 900 further includes a second invitation information presenting module configured to cause a third terminal associated with a third user of the live stream to present second invitation information; a third information input component presenting module configured to cause the third terminal to present a third information input component for receiving third information input by the third user in response to the confirmation of the second invitation information by the third user; and a third media content presenting module configured to present the third media content in the first live streaming interface, the third media content at least corresponding to the first information, the second information, and the third information.

In some embodiments, the apparatus 900 further includes a third invitation information presenting module configured to cause a fourth terminal associated with a fourth user of the live stream to present third invitation information in response to a decline of the second invitation information by the third user.

In some embodiments, the apparatus 900 further includes a partial presenting module configured to present, in the second live streaming interface of the live stream, at least a portion of the first information in association with the first media content; and/or present, in the second live streaming interface of the live stream, at least a portion of both the first information and the second information in association with the second media content.

In some embodiments, the apparatus 900 further includes a viewing entry providing module configured to cause the target live streaming interface to present target media content in the set of media content; and a set of media content presenting modules configured to cause the target live streaming interface to switch to presenting other media content in the set of media content in response to receiving a switching operation.

In some embodiments, the set of media content presenting module is further configured to cause the target live streaming interface to present target media content in the set of media content; and cause the target live streaming interface to switch to presenting other media content in the set of media content in response to receiving a switching operation.

In some embodiments, the set of media content presenting module is further configured to cause the target live streaming interface to present in association with the target media: at least a portion of target information used to determine the target media content, and/or identification information of a target user corresponding to the target media content, wherein the target user is an input party of the target information corresponding to the target media content.

In some embodiments, the viewing entry is configured to present a preview of at least one media content of the set of media content.

In some embodiments, the first user corresponds to an administrator of the live stream, and/or the second user is determined from a group of users having preset permissions in the live stream.

In some embodiments, the second user is determined based on an order in which the group of users are configured with the preset permissions.

In some embodiments, the preset permission includes a co-streaming permission of the live stream.

In some embodiments, the first media content and/or the second media content includes at least one of: text content, image content, video content, and audio content.

In some embodiments, the first media content and/or the second media content are presented as a background of at least a portion of the area of the first live streaming interface.

In some embodiments, the first description information and/or the second description information includes a content description part and a style description part.

In some embodiments, the style description part is selected from a set of preset styles.

The modules included in the apparatus 1000 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the modules in the apparatus 1000 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

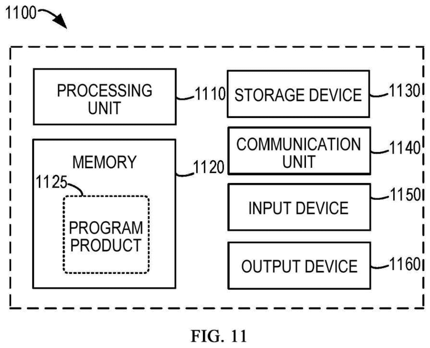

FIG. 11 illustrates a block diagram of an electronic device in which one or more embodiments in the disclosure may be implemented. It should be understood that the electronic device illustrated in FIG. 11 is merely example and should not constitute any limitation on the functionality and scope of the embodiments described herein.

As shown in FIG. 11, the electronic device 1100 is in the form of a general-purpose electronic device. Components of the electronic device 1100 may include, but are not limited to, one or more processors or processing units 1110, a memory 1120, a storage device 1130, one or more communication units 1140, one or more input devices 1150, and one or more output devices 1160. The processing unit 1110 may be an actual or virtual processor and capable of performing various processes according to programs stored in the memory 1120. In multiprocessor systems, multiple processing units execute computer-executable instructions in parallel to improve parallel processing capabilities of electronic device 1100.

Electronic device 1100 typically includes a plurality of computer storage media. Such media may be any available media accessible to the electronic device 1100, including, but not limited to, volatile and non-volatile media, removable and non-removable media. The memory 1120 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1130 may be a removable or non-removable medium and may include a machine-readable medium, such as a flash drive, magnetic disk, or any other medium, which may be capable of storing information and/or data (e.g., training data for training) and may be accessed within electronic device 1100.

The electronic device 1100 may further include additional removable/non-removable, volatile/non-volatile storage media. Although not shown in FIG. 11, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1120 may include a computer program product 1125 having one or more program modules configured to perform various methods or actions of various embodiments in the disclosure.

The communication unit 1140 is configured to communicate with another electronic device through a communication medium. Additionally, the functionality of components of the electronic device 1100 may be implemented in a single computing cluster or multiple computing machines capable of communicating over a communication connection. Thus, the electronic device 1100 may operate in a networked environment using logical connections with one or more other servers, network personal computers (PCs), or another network node.

The input device 1150 may be one or more input devices, such as a mouse, a keyboard, a trackball, or the like. The output device 1160 may be one or more output devices, such as a display, a speaker, a printer, or the like. The electronic device 1100 may also communicate with one or more external devices (not shown) through the communication unit 1140 as needed, external devices such as storage devices, display devices, etc. , communicate with one or more devices that enable a user to interact with the electronic device 1100, or communicate with any device (e.g., a network card, a modem, etc. ) that enables the electronic device 1100 to communicate with one or more other electronic devices. Such communication may be performed via an input/output (I/O) interface (not shown).

According to example implementations in the disclosure, there is provided a computer-readable storage medium having computer-executable instructions stored thereon, where the computer-executable instructions are executed by a processor to implement the method described above. According to example implementations in the disclosure, a computer program product is further provided, the computer program product being tangibly stored on a non-transitory computer-readable medium and including computer-executable instructions, the computer-executable instructions being executed by a processor to implement the method described above.

Aspects in the disclosure are described herein with reference to flowcharts and/or block diagrams of methods, apparatuses, devices, and computer program products implemented in accordance with the disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations in the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations in the disclosure have been described above, which are merely examples, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live stream interaction, comprising:
acquiring, at a first terminal, first information input by a first user of a live stream;
presenting, in a first live streaming interface of the live stream, first media content corresponding to the first information; and
presenting, in the first live streaming interface, second media content at least corresponding to second information based on the second information input by a second user of the live stream via a second terminal.

2. The method of claim 1, wherein presenting, in the first live streaming interface, the second media content at least corresponding to the second information comprises:
presenting, in the first live streaming interface, the second media content determined at least based on the first information and the second information.

3. The method of claim 1, wherein acquiring the first information input by the first user of the live stream comprises:
providing, in response to receiving a first preset operation, a first information input component, the first preset operation indicating an activation of a target interactive mode of the live stream; and
receiving, via the first information input component, the first information input by the first user.

4. The method of claim 1, wherein presenting the first media content corresponding to the first information in the first live streaming interface of the live stream comprises:
presenting a first set of candidate content determined based on the first information; and
presenting, based on a second preset operation for the first set of candidate content, the first media content determined based on the first information.

5. The method of claim 1, further comprising:
causing the second terminal to present first invitation information; and
causing the second terminal to provide a second information input component for receiving the second information input by the second user based on a confirmation of the first invitation information by the second user.

6. The method of claim 1, wherein presenting, in the first live streaming interface, the second media content based on the second information input by the second user of the live stream via the second terminal comprises:
causing the second terminal to present a second set of candidate content, the second set of candidate content corresponding to the first information and the information; and
presenting, by the first terminal in the first live streaming interface, the second media content at least corresponding to the first information and the second information based on a third preset operation for the second set of candidate content.

7. The method of claim 1, further comprising:
causing a third terminal associated with a third user of the live stream to present second invitation information;
causing the third terminal to present a third information input component for receiving third information input by the third user, in response to a confirmation of the second invitation information by the third user; and
presenting third media content in the first live streaming interface, the third media content at least corresponding to the first information, the information, and the third information.

8. The method of claim 7, further comprising:
causing a fourth terminal associated with a fourth user of the live stream to present third invitation information, in response to a decline of the second invitation information by the third user.

9. The method of claim 1, further comprising:
presenting, in the first live streaming interface of the live stream, at least a portion of the first information in association with the first media content; and/or
presenting, in the first live streaming interface of the live stream, at least a portion of both the first information and the second information in association with the second media content.

10. The method of claim 1, further comprising:
causing a target live streaming interface associated with the live stream to provide a viewing entry; and
causing the target live streaming interface to present a set of media content in response to a fourth preset operation for the viewing entry, the set of media content comprising at least the first media content and the second media content.

11. The method of claim 10, wherein causing the target live streaming interface to present the set of media content comprises:
causing the target live streaming interface to present target media content in the set of media content; and
causing the target live streaming interface to switch to presenting other media content in the set of media content in response to receiving a switching operation.

12. The method of claim 11, further comprising:
causing the target live streaming interface to present in association with the target media content: at least a portion of target information used to determine the target media content, and/or identification information of a target user corresponding to the target media content, wherein the target user is an input party of the target information corresponding to the target media content.

13. The method of claim 1, wherein the first user corresponds to an administrator of the live stream, and/or
the second user is determined from a group of users having preset permissions in the live stream.

14. The method of claim 1, wherein the first media content and/or the second media content are presented as a background of at least a portion of area of the first live streaming interface.

15. A method for live stream interaction, comprising:
presenting, at a second terminal, first media content in a second live streaming interface of a live stream, the first media content at least corresponding to first information input by a first user of the live stream via a first terminal;
acquiring, via the second live streaming interface, second information input by a second user of the live stream; and
presenting, in the second live streaming interface, second media content at least corresponding to the second information.

16. The method of claim 15, wherein presenting, in the second live streaming interface, the second media content comprises:
presenting, in the first live streaming interface, the second media content determined based at least on the first information and the second information.

17. The method of claim 15, wherein acquiring the second information input by the second user of the live stream comprises:
presenting first invitation information generated based on a preset operation of the first user;
providing a second information input component based on a confirmation of the first invitation information by the second user; and
receiving, via the second information input component, the second information input by the second user.

18. The method of claim 15, further comprising:
causing a third terminal associated with a third user of the live stream to present second invitation information;
causing the third terminal to present a third information input component for receiving third information input by the third user in response to a confirmation of the second invitation information by the third user; and
presenting third media content in the first live streaming interface, the third media content at least corresponding to the first information, the second information, and the third information.

19. The method of claim 15, further comprising:
presenting, in the second live streaming interface of the live stream, at least a portion of the first information in association with the first media content; and/or
presenting, in the second live streaming interface of the live stream, at least a portion of both the first information and the second information in association with the second media content.

20. The method of claim 15, further comprising:
causing a target live streaming interface associated with the live stream to provide a viewing entry; and
causing the target live streaming interface to present a set of media content in response to a fourth preset operation for the viewing entry, the set of media content comprising at least the first media content and the second media content.

21. The method of claim 20, wherein causing the target live streaming interface to present the set of media content comprises:
causing the target live streaming interface to present target media content in the set of media content; and
causing the target live streaming interface to switch to presenting other media content in the set of media content in response to receiving a switching operation.

22. The method of claim 21, further comprising:
causing the target live streaming interface to present in association with the target media content: at least a portion of target information used to determine the target media content, and/or identification information of a target user corresponding to the target media content, wherein the target user is an input party of the target information corresponding to the target media content.

23. The method of claim 15, wherein the first user corresponds to an administrator of the live stream, and/or
the second user is determined from a group of users having preset permissions in the live stream.

24. The method of claim 15, wherein the first media content and/or the second media content are presented as a background of at least a portion of area of the first live streaming interface.

25. An apparatus for live stream interaction, comprising:
a first acquiring module, configured to acquire, at a first terminal, first information input by a first user of a live stream;
a first presenting module, configured to present, in a first live streaming interface of the live stream, first media content corresponding to the first information; and
a second presenting module, configured to present, in the first live streaming interface, second media content at least corresponding to second information in response to the second information input by a second user of the live stream via a second terminal.

26. An apparatus for live stream interaction, comprising:
a third presenting module, configured to present, at a second terminal, first media content in a second live streaming interface of a live stream, the first media content at least corresponding to first information input by a first user of the live stream via a first terminal;
a second acquiring module, configured to acquire, via the second live streaming interface, second information input by a second user of the live stream; and
a fourth presenting module, configured to present, in the second live streaming interface, second media content at least corresponding to the second information.

27. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 14 or 15 to 24.

28. A computer-readable storage medium having stored thereon a computer program executable by a processor to perform the method of any of claims 1 to 14 or 15 to 24.
